# EUROPEAN PATENT SPECIFICATION

(11) **EP 4 169 718 B1**
(45) Date of publication and mention of the grant of the patent: **25.11.2026**
(21) Application number: 21845543.4
(22) Date of filing: 07.07.2021
(51) Int. Cl.: B33Y 10/00, B33Y 30/00, B33Y 50/00, B23K 9/032, B23K 9/04, B23K 31/00, B22F 10/22, B22F 10/80, B23K 9/235, G05B 19/4099

(54) **BUILD PLAN ASSISTANCE METHOD AND BUILD PLAN ASSISTANCE DEVICE**
BAUPLANUNTERSTÜTZUNGSVERFAHREN UND BAUPLANUNTERSTÜTZUNGSVORRICHTUNG
PROCÉDÉ D'AIDE AU PLAN DE CONSTRUCTION ET DISPOSITIF D'AIDE AU PLAN DE CONSTRUCTION

(30) Priority: 20.07.2020 JP 2020123860
(43) Date of publication of application: 26.04.2023
(73) Proprietor: KABUSHIKI KAISHA KOBE SEIKO SHO (KOBE STEEL, LTD.), Hyogo 651-8585 (JP)
(72) Inventor: TAMURA, Eiichi, Kobe-shi, Hyogo 651-2271 (JP)
(74) Representative: Müller-Boré & Partner Patentanwälte PartG mbB
(86) International application number: PCT/JP2021/025684
(87) International publication number: WO 2022/019122

(56) References cited:
- WO-A1-2020/003899
- JP-A- 2018 027 558
- JP-A- 2018 058 117
- JP-A- 2020 001 059
- JP-A- 2020 015 944
- US-A1- 2017 032 281
- US-A1- 2020 147 889

## Description

### TECHNICAL FIELD

The present invention relates to a building plan assistance method and a building plan assistance device when a built object is manufactured by weld beads.

### BACKGROUND ART

In recent years, there is a growing need for manufacturing a component by additive manufacturing using a 3D printer. Researches and developments have been made toward practical applications of building using a metal material. A 3D printer for additive manufacturing of a metal material produces a built object having a desired shape by melting and solidifying a metal powder or a metal wire by use of a heat source such as a laser or an arc, and depositing the weld metal (weld beads).

However, in the additive manufacturing using the metal material, material properties such as metal structure and hardness tend to change according to manufacturing conditions. The properties of the metal material forming the built object may significantly vary from expected properties. Therefore, in an existing welding technique, the manufacturing conditions are adjusted based on empirical knowledge, trial and error, etc. such that the desired shape and properties can be obtained by predicting properties of the built object when the built object is manufactured under specified manufacturing conditions.

Further, in order to embody utilization of information from the above-mentioned experience and trial and error on a computer, for example, Patent Literature 1 discloses a case in which machine learning is utilized in a process of preparing a test cross-sectional image of a weldment and a test weldment, and determining suitability of weldment specifications such as a strength, a ductility, a hardness, a toughness, and a grain structure based on the test cross-sectional image of the weldment and the test weldment.

US 2017/032281 A1 describes a weld production knowledge system for processing welding data collected from one of a plurality of welding systems, the weld production knowledge system comprising a communication interface communicatively coupled with a plurality of welding systems situated at one or more physical locations. The communication interface may be configured to receive, from one of said plurality of welding systems, welding data associated with a weld. The weld production knowledge system may comprise an analytics computing platform operatively coupled with the communication interface and a weld data store. The weld data store employs a dataset comprising welding process data associated with said one or more physical locations, and/or weld quality data associated with said one or more physical locations. The analytics computing platform may employ a weld production knowledge machine learning algorithm to analyze the welding data vis-à-vis the weld data store to identify a defect in said weld. WO2020/00389 discloses a building plan creation unit wherein a stacking plan creating unit decomposes the model of the shape of a welding bead into a plurality of layers according to the height of the bead, and then, for each layer of the decomposed model, the trajectory of the torch for forming the bead and the heating conditions for forming the bead is prepared.

### CITATION LIST

### PATENT LITERATURE

Patent Literature 1: JP2019-5809A

### SUMMARY OF INVENTION

### TECHNICAL PROBLEM

However, it is considered difficult to predict, based on material viewpoints, the properties of the built object manufactured by additive manufacturing because an additive manufacturing process is more complicated than a simple welding process. In addition, in a manufacturing method based on additive manufacturing, a degree of freedom in manufacturing conditions is extremely high, and there are various combinations of properties of a built object. Property prediction requires an enormous amount of arithmetic process.

### BACKGROUND ART

Accordingly, an object of the present invention is to provide a building plan assistance method and a building plan assistance device capable of efficiently predicting properties of a built object with little effort and assisting creation of a more appropriate building plan for the built object.

### SOLUTION TO PROBLEM

The object of the present invention is solved by the subject-matter having the features of the independent claims. Additional embodiments are defined by the dependent claims.

### ADVANTAGEOUS EFFECTS OF INVENTION

According to the present invention, it is possible to efficiently predict properties of a built object with little effort and assist creation of a more appropriate building plan for the built object.

### BRIEF DESCRIPTION OF DRAWINGS

Fig. 1 is an overall configuration diagram of a building system for manufacturing a built object;
Fig. 2 is a schematic block diagram of a robot control device;
Fig. 3 is a schematic block diagram of a building control device;
Fig. 4 is a diagram illustrating a procedure for creating a building program for additive manufacturing;
Fig. 5 is a diagram illustrating procedures for constructing a database;
Fig. 6 is a flowchart showing procedures for constructing the database;
Fig. 7 is a flowchart showing procedures for creating an initial database to be used in a first procedure;
(A) of Fig. 8 is a diagram illustrating a state in which input information and output information are related by using a mathematical model, and (B) of Fig. 8 is a diagram illustrating a database in which the input information and the output information are associated with each other;
Fig. 9 is a diagram illustrating a relation between input information including a plurality of items and output information using a mathematical model;
Fig. 10 is a diagram illustrating a process of dividing a shape of a built object to be manufactured into a plurality of element shapes and determining a welding track of each element shape;
Fig. 11 is a flowchart showing procedures for creating a building plan when the shape of the built object is decomposed into the element shapes;
Fig. 12 is a diagram illustrating relations between input information, intermediate output information, and output information using mathematical models;
Fig. 13 is a graph showing a temperature history at a specific position of a weld bead to be formed during building;
Fig. 14 are graphs showing a difference in a cooling property when a bead is formed with different heat inputs, (A) is a graph showing a temperature change property in a case of a relatively high heat input, and (B) is a graph showing a temperature change property in a case of a relatively low heat input; and
Fig. 15 is a diagram illustrating a state in which a plurality of databases that relate input information to output information are selectively used.

### DESCRIPTION OF EMBODIMENTS

Embodiments of the present invention will be described in detail below by referring to the drawings.

Here, although a case in which weld beads each formed by melting and solidifying a filler metal fed from a welding head are additively manufactured into a desired shape by a building device is described as an example, configurations of a building method and a building device are not limited thereto. For example, other building methods such as a powder sintering and additive manufacturing method may be used.

### <Configuration of Building System>

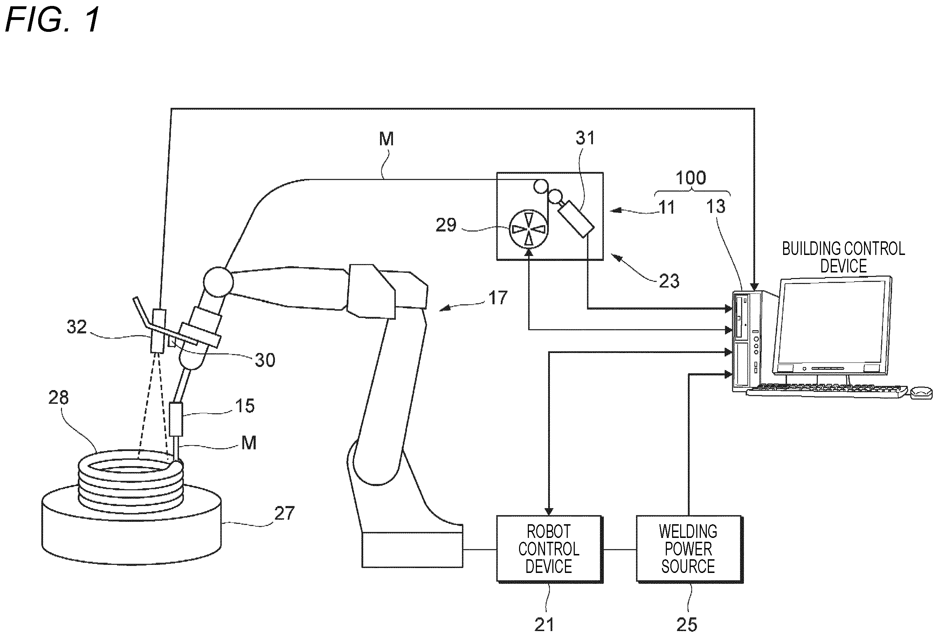

Fig. 1 is an overall configuration diagram of a building system for manufacturing a built object. A building system 100 according to this configuration includes a building device 11 and a building control device 13 that controls the building device 11.

The building device 11 includes a welding robot 17 provided with a welding head having a welding torch 15 on a tip shaft, a robot control device 21 that drives the welding robot 17, a filler metal feeding unit 23 that feeds a filler metal (welding wire) M to the welding torch 15, and a welding power source 25 that supplies a welding current.

### (Building Device)

The welding robot 17 is a multi-joint robot, and a continuously fed filler metal M is supported at a tip of the welding torch 15 attached to a tip shaft of a robot arm. A position and a posture of the welding torch 15 can be set three-dimensionally desirably within a range of the degree of freedom of the robot arm according to a command from the robot control device 21.

A shape sensor 32 and a temperature sensor 30 that move integrally with the welding torch 15 are provided on the tip shaft of the welding robot 17.

The shape sensor 32 is a non-contact-type sensor that measures a shape of a weld bead 28 to be formed and, if necessary, a shape around a bead forming position. Measurement by the shape sensor 32 may be performed at the same time when a weld bead is formed, or may be performed at different timings before and after the bead is formed. As the shape sensor 32, a laser sensor that detects a three-dimensional shape based on a position of a reflected light of an irradiated laser light or a time from an irradiation timing to a time at which the reflected light is detected can be used. A detection method of the shape sensor 32 is not limited to laser, and the shape sensor 32 may be a sensor using another detection method.

The temperature sensor 30 is a contact-type sensor such as a radiation thermometer or thermography, and detects a temperature (temperature distribution) at any position of a built object.

The welding torch 15 is a gas metal arc welding torch that has a shield nozzle (not shown) and is supplied with a shield gas from the shield nozzle. An arc welding method may be either a consumable electrode type such as shielded metal arc welding or carbon dioxide gas arc welding, or a non-consumable electrode type such as TIG welding or plasma arc welding, and is appropriately selected depending on an additively-manufactured object to be produced.

For example, in the case of the consumable electrode type, a contact tip is disposed inside the shield nozzle, and the filler metal M to which a melting current is to be supplied is held on the contact tip. The welding torch 15 generates an arc from a tip of the filler metal M in a shield gas atmosphere while holding the filler metal M.

The filler metal feeding unit 23 includes a reel 29 around which the filler metal M is wound, and a wire feed sensor 31 that measures a feed amount of the filler metal M fed from the reel 29 to a delivery mechanism and the welding torch 15. The filler metal M is fed from the filler metal feeding unit 23 to a delivery mechanism (not shown) attached to the robot arm or the like, and fed to the welding torch 15 while being fed forward and backward by the delivery mechanism as necessary.

Any commercially available welding wire can be used as the filler metal M. For example, welding wires provided as MAG welding and MIG welding solid wires (JIS Z 3312) for mild steel, high tensile steel and cryogenic steel, and arc welding flux-cored wires (JIS Z 3313) for mild steel, high tensile steel and cryogenic steel can be used. In addition, filler metals M such as aluminum, aluminum alloys, nickel, nickel-based alloys, etc. can be used depending on desired properties.

Then, when the continuously fed filler metal M is melted and solidified by an arc as described above, the weld bead 28 which is a melt-solidified body of the filler metal M is formed on a base plate 27. The base plate 27 is a metal plate such as a steel plate, but is not limited to such a plate-shaped object, and may be in other shapes such as a block shape, a rod shape, or a columnar shape.

### (Robot Control Device)

The robot control device 21 drives the welding robot 17 to move the welding torch 15 and melt the continuously fed filler metal M by a welding current and a welding voltage from the welding power source 25.

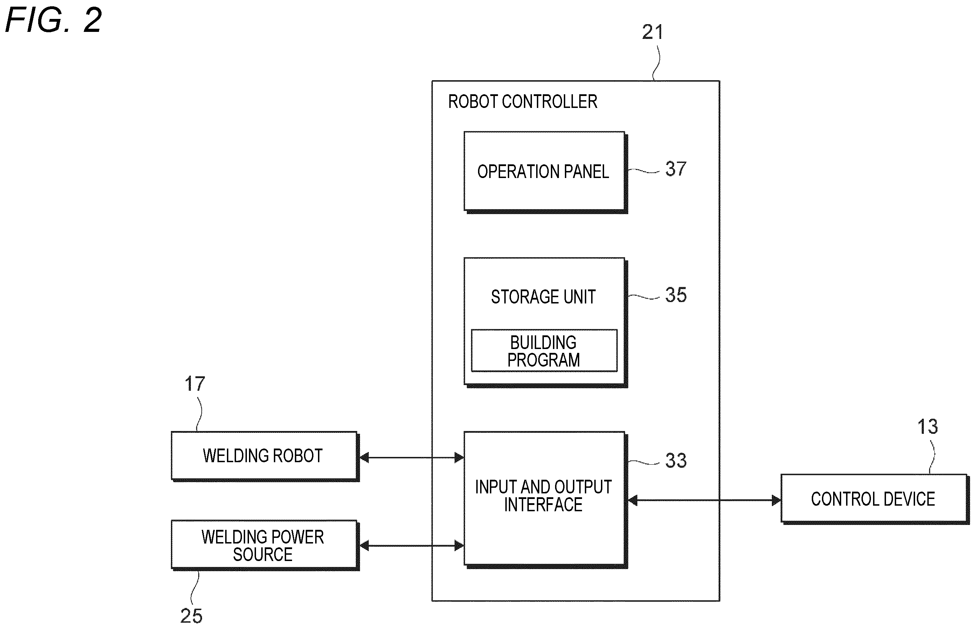

Fig. 2 is a schematic block diagram of the robot control device 21.

The robot control device 21 is a computer device including an input and output interface 33, a storage unit 35 and an operation panel 37.

The input and output interface 33 is connected to the welding robot 17, the welding power source 25 and the building control device 13. The storage unit 35 stores various types of information including a drive program, which will be described later. The storage unit 35 includes a storage exemplified by a memory such as a ROM and a RAM, a drive device such as a hard disk and a solid state drive (SSD), a storage medium such as a CD, a DVD, and various memory cards, and various information can be input and output. The operation panel 37 may be an information input unit such as an input operation panel, or may be an input terminal for teaching the welding robot 17 (a teaching pendant).

A building program corresponding to a built object to be produced is transmitted from the building control device 13 to the robot control device 21. The building program includes a large number of instruction codes, and is created based on an appropriate algorithm according to various conditions such as shape data (CAD data, etc.), a material, and a heat input of the built object.

The robot control device 21 executes the building program stored in the storage unit 35 to drive the welding robot 17, the filler metal feeding unit 23, the welding power source 25, etc., and forms the weld bead 28 according to the building program. That is, the robot control device 21 drives the welding robot 19 to move the welding torch 15 along a track (welding track) of the welding torch 15 set in the building program, and drives the filler metal feeding unit 23 and the welding power source 25 according to a set welding condition to melt and solidify the filler metal M at the tip of the welding torch 15 by arc. Accordingly, the weld bead 28 is formed on the base plate 27. The weld beads 28 are adjacent to each other to form a weld bead layer, and a next weld bead layer is deposited on this weld bead layer, which is repeated to form a built object having a desired three-dimensional shape.

It should be noted that the building control device 13 may be disposed apart from the building device 11 and connected to the building device 11 from a remote location via a network, a communication unit, a storage medium, etc. The building program may be created by another device other than the building control device 13 and may be transmitted by communication.

### (Generation of Building Program)

Next, a configuration of the building control device 13 and a specific procedure until the building control device 13 generates the building program will be described.

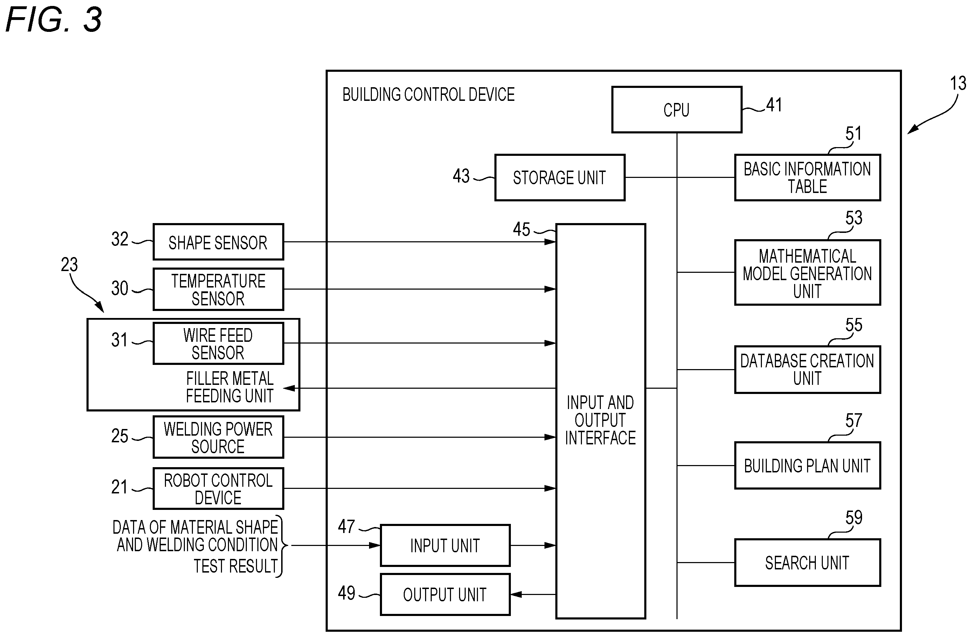

Fig. 3 is a schematic block diagram of the building control device 13.

The building control device 13 is a computer device similar to the robot control device 21 and includes a CPU 41, a storage unit 43, an input and output interface 45, an input unit 47, and an output unit 49.

The storage unit 43 includes a ROM, which is a nonvolatile storage area, and a RAM, which is a volatile storage area. The input and output interface 45 is connected to the shape sensor 32, the temperature sensor 30, the filler metal feeding unit 23 including the wire feed sensor 31, the welding power source 25, the robot control device 21, the input unit 47, and the output unit 49, which are described above.

The input unit 47 is an input device such as a keyboard and mouse, and the output unit 49 includes a display device such as a monitor or an output terminal to which an output signal is transmitted.

In addition, the building control device 13 further includes a basic information table 51, a mathematical model generation unit 53, a database creation unit 55, a building plan unit 57, and a search unit 59, each of which will be described in detail below. Each of the components described above is operated according to a command from the CPU 41, and exhibits a function thereof.

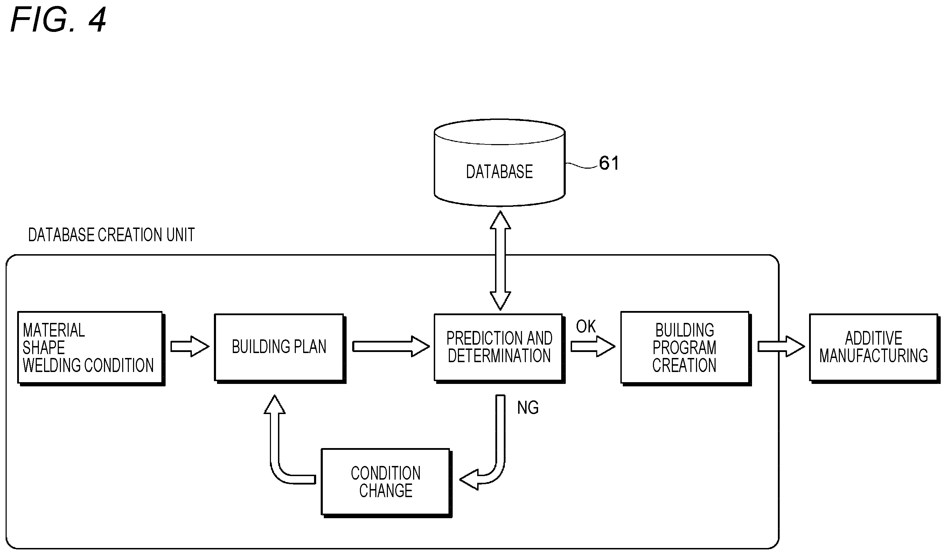

Fig. 4 is a diagram illustrating a procedure for creating a building program for additive manufacturing.

First, an operator inputs, by the input unit 47 of the building control device 13 shown in Fig. 3, data or the like of a material, a shape, and a welding condition of a built object to be manufactured. The building control device 13 creates a building plan according to the input data such that the built object can obtain desired properties. For example, a model is generated based on shape data, the generated model is divided into layers for each predetermined height of a weld bead, and various conditions such as a material, a bead width, and an order of forming a bead (welding track) of the weld bead are determined so as to fill each obtained layer with the weld bead. There are various methods for determining these welding tracks and the like, and the determination method is not limited.

Next, property values of the built object (metal structure, average grain size, Vickers hardness, tensile strength, toughness, etc.) when the built object is manufactured according to the created building plan are predicted with reference to a database 61 prepared in advance, which indicates correspondences between various manufacturing conditions and properties of the built object manufactured under the conditions. It is preferable to use the parameters described above as the property values. Accordingly, since each property value can be easily measured by using a general-purpose measurement device such as a metallurgical microscope, an electron microscope (for example, SEM), and a Vickers tester, collection of data is facilitated.

When the predicted properties of the built object do not satisfy the desired properties, the building plan is created again by adjusting the various manufacturing conditions described above. Then, when the properties of the built object according to the created building plan satisfy the desired properties, a building program is created according to the building plan. The building program thus created is sent to the robot control device 21 shown in Fig. 1. The robot control device 21 executes the sent building program to additively manufacture the built object.

In a building plan assistance method and device according to the present invention, the database 61 used for predicting and judging whether the built object can obtain the desired properties by the created building program is efficiently constructed with little effort. Accordingly, accurate and quick determination of the building plan can be performed, and thus assistance can be provided for smoothly creating a more appropriate building plan.

### <First Database Configuration Example>

Next, a method for constructing the database 61 described above will be described.

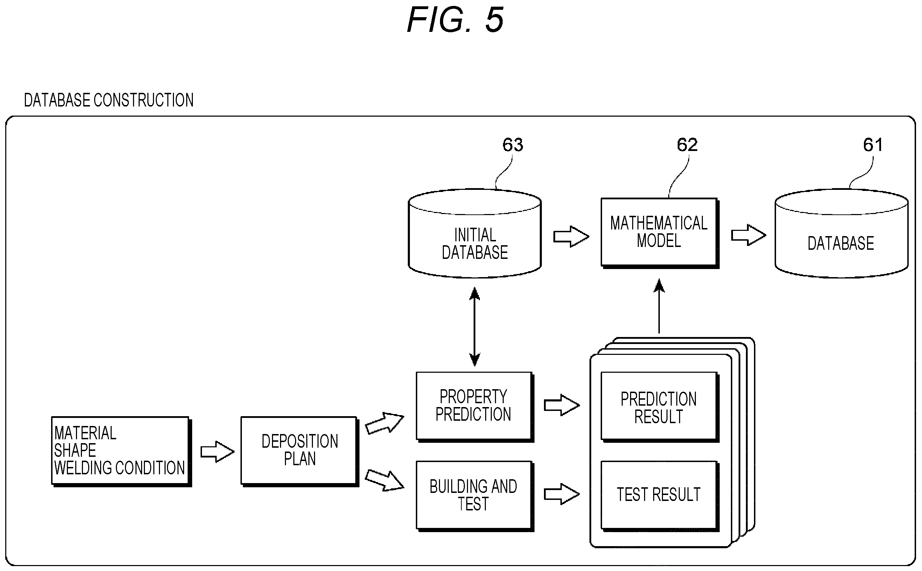

Fig. 5 is a diagram illustrating procedures for constructing the database 61. Here, input information and output information are related by using a mathematical model, the input information includes items of a material of the built object, a welding condition of the weld bead, and a partial welding track, and the output information includes a property value of the built object in which additive manufacturing is performed under conditions of the input information. The relation process is repeatedly performed by machine learning, and the database 61 referenced in the prediction and judgment shown in Fig. 4 is created based on the obtained mathematical model.

Specifically, the building control device 13 creates a building plan according to the input data such as the material, the shape, and the welding condition of the built object. Property values of the built object when the built object is produced according to this building plan are obtained by the following first procedure and second procedure.

In the first procedure, the building control device 13 predicts, with reference to an initial database 63 in which relations between the building plan and the property values are registered in advance, properties of the built object to be additively-manufactured according to the created building plan.

In the second procedure, the building control device 13 drives the robot control device 21 in accordance with the created building plan, and causes the building device 11 to additively manufacture the built object. A test sample is cut out from the additively-manufactured built object, and a mechanical strength, a metal structure, etc. are actually measured by testing (observation).

A mathematical model 62 is generated by comparing a prediction result and a test result of the properties of the built object according to the same building plan obtained in this way such that a difference between the two results is reduced, and the database 61 is created using this mathematical model 62. The initial database 63 and the database 61 are created by the database creation unit 55 shown in Fig. 3, but may be created by a device other than the building control device 13.

Here, a flow of a series of processes including generating the mathematical model 62 by machine-learning the prediction result of the properties according to the initial database 63 in the first procedure and the test result in the second procedure, and creating the database 61 using this mathematical model 62 will be described.

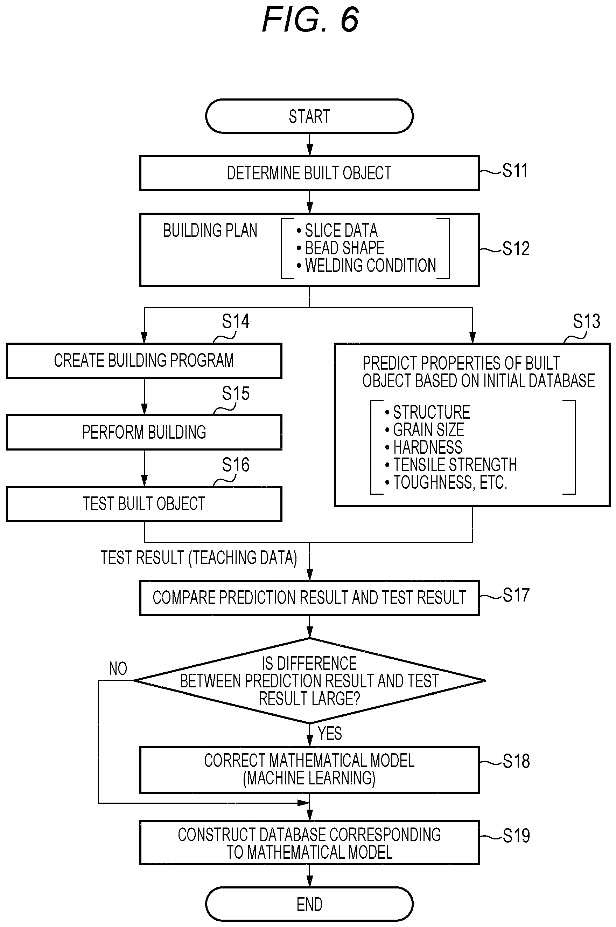

Fig. 6 is a flowchart showing procedures for constructing the database 61.

First, a built object to be manufactured is determined and shape data (shape data by 3D-CAD) is created (S11). A building plan is created based on the shape data of this built object (S12). The building plan includes a plurality of slice data obtained by dividing a model of the built object into layers by defining a predetermined depositing direction axis, a shape of a weld bead in each slice data, a welding condition for forming the weld bead, and the like.

Next, properties of the built object are predicted according to the first procedure based on the created building plan (S13). The properties of the built object are predicted by using the initial database 63. The initial database 63 is created based on the basic information table 51 (Fig. 3) which is based on experience and knowledge obtained from past building and indicates correspondences between various manufacturing conditions and property values of the built object manufactured under the conditions.

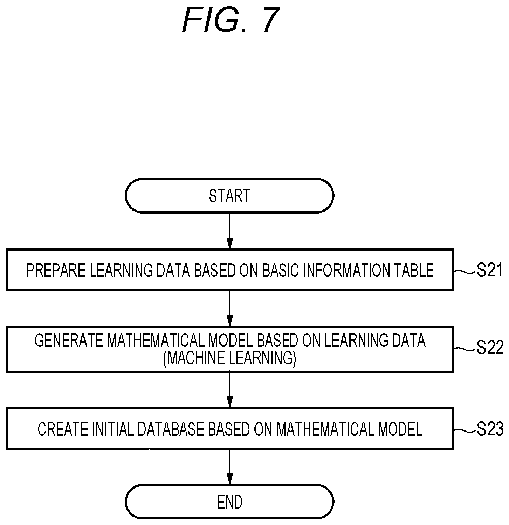

Fig. 7 is a flowchart showing procedures for creating the initial database 63 to be used in the first procedure.

First, parameter information (for example, a pass forming the weld bead, the number of passes, an order of forming the weld bead (welding track), and a cross-sectional shape of the weld bead) to be used in the database is extracted from the basic information table 51 prepared in advance, and is prepared as learning data (S21).

Next, the prepared learning data and property values of the built object corresponding to the learning data are related by an initial mathematical model (S22). That is, by repeatedly performing machine learning on a plurality of pieces of learning data and property values of the built object corresponding the learning data, an initial mathematical model expressing relations between the learning data and the property values of the built object are generated. The "mathematical model" as used herein means a model capable of formulating a quantitative behavior of properties of a built object and simulating nature of the properties of the built object by calculation. That is, the mathematical model is a calculation model created based on a group of experimental data collected in experiments and related by a predetermined algorithm, and this calculation model may be optimized to match well with the experimental data by assuming a predetermined function, or may be created by providing input information and output information by machine learning. Examples of a specific algorithm include a support vector machine, a neural network, and a random forest.

Then, the property values of the built object corresponding to the plurality of pieces of learning data are predicted by using the generated initial mathematical model, and these predicted values are made to correspond to the learning data and are registered as table components of the initial database 63 (S23). In this way, the initial database 63 is created.

Meanwhile, in the second procedure (S14 to S16 in Fig. 6), a built object is produced based on the created building plan. That is, the building plan unit 57 (Fig. 3) creates a building program according to the building plan (S14), and the building device 11 shown in Fig. 1 is driven by executing the building program to build a built object (S15). Then, a test sample is cut out from the obtained built object, and various properties of the test sample are tested (S16).

Then, the prediction result of the properties of the built object obtained in the first procedure is compared with the test result obtained in the second procedure (S17). When the difference between the prediction result and the test result is large, the mathematical model 62 shown in Fig. 5 (corresponding to the initial mathematical model used in creating the initial database 63) is corrected such that the difference between the two results is reduced (S18). That is, the mathematical model 62 is caused to machine-learn such that the prediction result approaches the test result by using the test result for the input information as teaching data. It should be noted that when the difference between the prediction result and the test result is small, the mathematical model 62 is not corrected, but machine learning may be performed to improve accuracy of the mathematical model 62. In this way, the mathematical model 62 becomes a learned model that has machine-learned a relation between the input information and the output information.

Then, by using the mathematical model 62 obtained by causing the initial mathematical model to further machine-learn, property values (output information) of the built object corresponding to a plurality of any conditions (input information) are predicted, and the set conditions and the predicted property values are associated with each other to form table components of the database 61. In this way, the initial database 63 is corrected by using the mathematical model 62 to construct the database 61 in which a prediction result and a test result for a specific condition accurately match (S19).

Thus, a part where a test result does not exist can be complemented by predicting output information from a plurality of input information by using the mathematical model 62, thereby easily increasing an amount of information in the database 61 and improving accuracy of prediction.

Next, a specific method of constructing the database 61 by using the mathematical model 62 will be described in more detail.

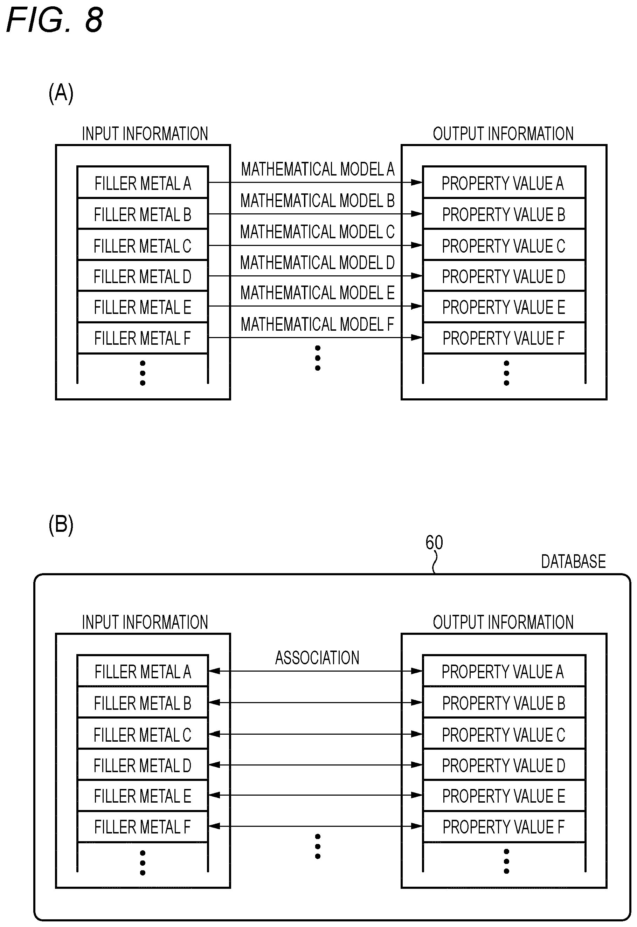

(A) of Fig. 8 is a diagram illustrating a state in which input information and output information are related by using a mathematical model, and (B) of Fig. 8 is a diagram illustrating a database in which the input information and the output information are associated with each other.

Here, a filler metal, which is a material of the built object, will be described as an example of the input information. As shown in (A) of Fig. 8, various filler metals A, B, C ... can be selected as the filler metal. When a built object is produced by using each of the filler metals A, B, C, ..., properties of the built object to be obtained include a property value A for the filler metal A, a property value B for the filler metal B, a property value C for the filler metal C, ....

In that case, each type of filler metal is related to a property value by using a separate mathematical model such as the property value A of the built object for the filler metal A using a mathematical model A, the property value B of the built object for the filler metal B using a mathematical model B, and the property value C of the built object for the filler metal C using a mathematical model C.

Therefore, as shown in (B) of Fig. 8, in the created database 61, the filler metals are respectively related to property values such as the filler metal A and the property value A being associated, the filler metal B and the property value B being associated, and the filler metal C and the property value C being associated. Accordingly, since the mathematical models are individually machine-learned for each type of filler metal to determine the property values, the property values corresponding to the properties of the filler metal can be accurately and finely set. Therefore, accuracy of predicting the property values can be improved.

The type of filler metal may be specified by a trade name such as MG-51T and MG-S63B (solid wire manufactured by Kobe Steel, Ltd.), or may be distinguished by a component composition (for example, carbon content) of the filler metal.

In the above-mentioned example, each property value is related to each type of filler metal, but actual input information includes more various kinds of items.

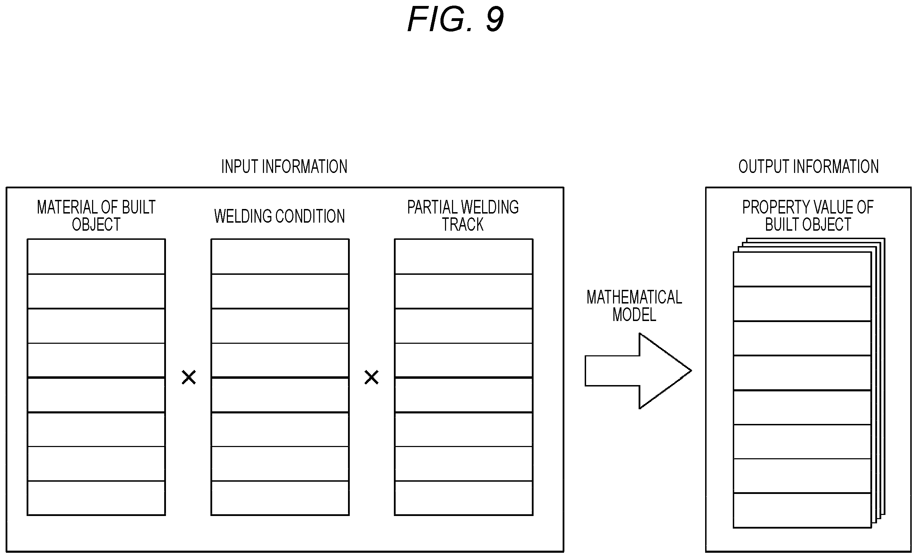

Fig. 9 is a diagram illustrating a relation between input information including a plurality of items and output information using a mathematical model.

The input information at least includes a material of a built object, a welding condition, and a partial welding track. In addition to the filler metal described above, examples of a material of a weldment include members such as the base plate 27 (Fig. 1) on which the weld bead is formed, and a structural member (not shown) that is joined to the weld bead and becomes a component of the built object.

Examples of the welding condition include at least one of a welding current, a welding voltage, a travel speed, a width of a pitch between welding tracks, an interpass time, a target position of the welding head, a welding position of the welding head, and a speed of feeding the filler metal when the weld bead is formed, or a combination thereof. Here, the target position of the welding head is a torch tip position for arranging a torch tip at a welding location, and the welding position of the welding head is an inclination angle between a vertical axis and a torch axis and a circumferential angle in a torch inclination direction around the vertical axis. In addition, the width of a pitch between welding tracks is a distance between adjacent welding tracks, and the interpass time represents a time moving from a welding pass of one welding track to a welding pass of a next welding track in a plurality of welding tracks.

The above-mentioned interpass time affects a metal structure of the weld bead to be formed.

During formation of the weld bead, when a filler metal made of a molten mild steel is quenched, the filler metal becomes a mixed structure mainly containing bainite. In addition, when the filler metal made of the molten mild steel solidifies naturally, the filler metal becomes a structure containing coarse ferrite, pearlite, and bainite. In a case of depositing weld beads, the structure becomes a structure in which when the weld beads are heated above a transformation point of ferrite by depositing weld beads of layers subsequent to the next layer, pearlite and bainite transform into ferrite, and coarse ferrite is refined.

In a case of adjusting the interpass time, for example, depositing the weld beads of the next layer while controlling an interlayer time and a heat input, and similarly depositing weld beads of the layers subsequent to the next layer, so that an interpass temperature falls within a range of 200°C to 550°C, the weld beads are heated above the transformation point of ferrite. In that case, a homogenized structure made of a fine ferrite phase with an average grain size of 10 µm or less is obtained. Such a weld bead has a high hardness (for example, about 130 to 180 Hv in Vickers hardness), a good mechanical strength, and a substantially uniform hardness with little variation.

Meanwhile, when the interpass temperature is less than 200°C in a case of depositing the weld beads of the next layer, even when the weld beads are heated by depositing the weld beads of the layers subsequent to the next layer, the transformation point of ferrite is not exceeded, and a homogenized structure made of a fine ferrite phase cannot be obtained. For example, at an initial stage of building, the interpass temperature in the case of depositing the weld beads of the next layer is less than 200°C due to heat removal by the base plate 27. In that case, the weld beads at the initial stage of building become a mixed structure mainly containing bainite. In addition, when the interpass temperature exceeds 550°C, the weld beads are heated by depositing the weld beads of the next layer, and the weld beads are flattened and drip, making it impossible to deposit the weld beads in a predetermined shape. Further, since weld beads at a later stage of building (the uppermost layer of the built object) are not deposited with weld beads of a next layer and are not heated again, the molten filler metal remains in a naturally solidified state, that is, a structure containing coarse ferrite, pearlite and bainite.

Thus, the metal structure of the weld bead to be formed during the interpass time changes, and accordingly properties of the built object also change. The above is about the effect of the interpass time on the properties of the built object, but it has been found that other parameters similarly affect the properties of the built object.

The partial welding track is a welding track for an element shape obtained by cutting out a part of a shape of the built object, and means a welding track for, when a complex shape is decomposed into simple shapes (element shapes), building the simple shapes. Information regarding each welding track includes information regarding a pass forming the weld bead, the number of passes, an order of forming the weld bead, and a cross-sectional shape of the weld bead.

Here, a material of a building material, the welding condition, and the partial welding track described above are each referred to as an "item", and the filler metals A, B, C, ... , the welding current, the welding voltage, the travel speed, ... , the element shape, the pass, the number of passes, ... for items are each referred to as an "input subitem".

By dividing each item of the input information into a plurality of input subitems, a range that can be input can be restricted. That is, by preventing a content other than the input subitems from being set as input data, for example, it is possible not to deviate from a recommended range of the welding robot 17 or the like of the building device 11, a recommended condition for using the filler metal, etc. Accordingly, it is possible to prevent a trouble due to a failure in a device and a material in advance, and to avoid presentation of an inappropriate condition.

As shown in Fig. 9, the input information includes the plurality of items such as the material of the built object, the welding condition, and the partial welding track, and each item includes a plurality of input subitems that are mutually different.

In addition, when contents of the items are represented by numerical values, regarding input data for each item, input subitems that divide a range of the input data into a plurality of sections may be defined, and a representative value corresponding to each input subitem may be defined as the input data. The representative value for each input subitem may be a value that represents the input subitem, such as a value of a median value, or an upper limit value, or a lower limit value within the input subitem.

In addition, a range of the input data does not need to be the same as the input information, which is performance data. The database creation unit 55 inputs the input data for each input subitem determined in this way to a mathematical model created by the mathematical model generation unit 53 to obtain output data for each input subitem.

Thus, the input subitems of each item are related to the property values of the built object by the mathematical model. Although it is possible to cause a plurality of mathematical models to learn in all combinations as described above, it is preferable to aggregate the plurality of mathematical models into approximately one mathematical model based on a specific welding condition, a welding track pattern, etc., and tune for each parameter based on the mathematical model. The "tune" as used here includes transfer learning and the like, in which one (learned model) learned in one area serves and is caused to efficiently learn in another area. Accordingly, it is possible to reduce an amount of calculation by reducing the learning data.

Next, an element shape in a case of determining a partial welding track and a welding track for each element shape will be described together with a specific example of a built object.

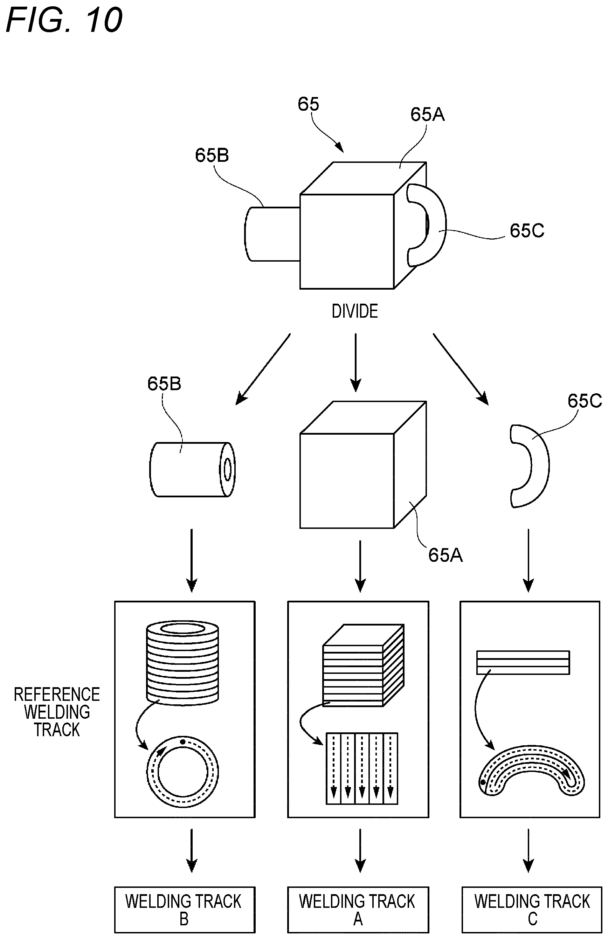

Fig. 10 is a diagram illustrating a process of dividing a shape of a built object to be produced into a plurality of element shapes and determining a welding track of each element shape.

Here, a built object including a main body 65A, a first protrusion 65B connected to one surface of the main body 65A, and a second protrusion 65C connected to the other surface of the main body 65A is exemplified as the built object 65. When the built object 65 is divided into simple element shapes, the cylindrical first protrusion 65B, the cubic main body 65A, and the U-shaped second protrusion 65C are obtained. The division into the element shapes may be performed manually or by pattern matching with pre-registered simple shapes or the like.

For each of the divided element shapes, a welding track indicating an order of forming the weld bead is determined. That is, the welding track is determined for each divided element shape. The welding track for each element shape may be determined by designing each time the main body is divided into element shapes, but since the element shape is a simple shape, a plurality of types of welding tracks (reference welding tracks) each having a simple shape may be registered in advance in an element database, and a welding track having a shape corresponding to the element shape may be determined with reference to this element database.

For example, in a case of a cylindrical element shape, the cylindrical body is divided into a plurality of layers, and for each of the divided layers, a pass (torch track) for forming the weld bead become a determined reference welding track. By applying this reference welding track to the first protrusion 65B, a welding track B, which is a building procedure in a case of building the first protrusion 65B with the weld bead, can be easily determined.

For the main body 65A and the second protrusion 65C, similarly, reference welding tracks each having a similar shape can be determined by searching from the element database, and a welding track A of the main body 65A and a welding track C of the second protrusion 65C can be easily determined from the determined reference welding tracks. Thus, even for a built object having a complicated shape, by dividing the built object into element shapes, the built object can be regarded as an aggregate of simple shapes, and thus a building plan can be simplified.

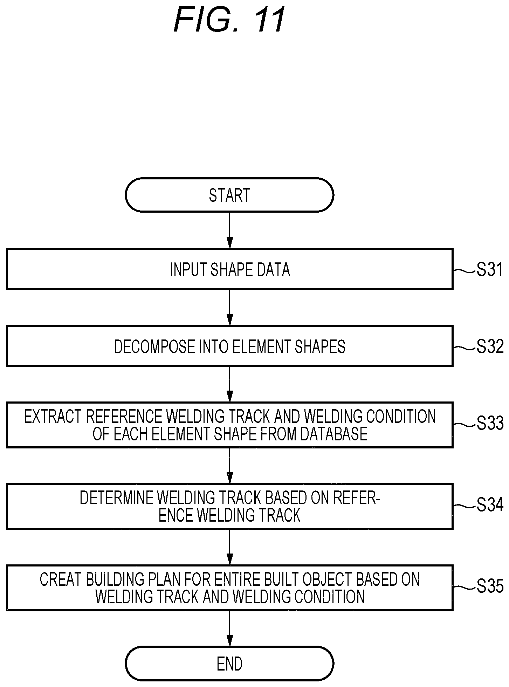

Fig. 11 is a flowchart showing procedures for creating a building plan when the shape of the built object is decomposed into the element shapes.

When the shape data of the built object to be produced is input to the building plan unit 57 of the building control device 13 shown in Fig. 3 (S31), the building plan unit 57 decomposes a model created from the shape data into a plurality of element shapes (S32). Then, various pieces of information such as a reference welding track and a welding condition corresponding to each decomposed element shape are separately extracted by searching an element database (not shown) prepared in advance (S33). The element database used here is information including reference welding tracks and welding conditions that are set corresponding to element shapes, and these pieces of information are registered in the element database in advance.

Each welding track is determined by applying the extracted reference welding track to the corresponding element shape (S34), and a building plan for the entire built object is created by combining the welding track and the welding condition (S35).

The created building plan is the building plan of S12 shown in Fig. 7. Therefore, regarding the building plan obtained by decomposing the shape of the built object into the element shapes and determining the welding track and the welding condition for each element shape, by generating a mathematical model and constructing the database 61 in the same manner as described above, the building plan shown in Fig. 4 is assisted.

It should be noted that regarding the welding condition, information regarding the welding condition can be easily collected from drive signals and the like of the building device 11, the wire feed sensor 31, the shape sensor 32, and the welding robot 17. Those values can also be used to feedback control the shape of the model as necessary.

### <Second Database Configuration Example>

Next, a case in which intermediate output information is provided in addition to the input information and the output information of the database 61 described above will be described.

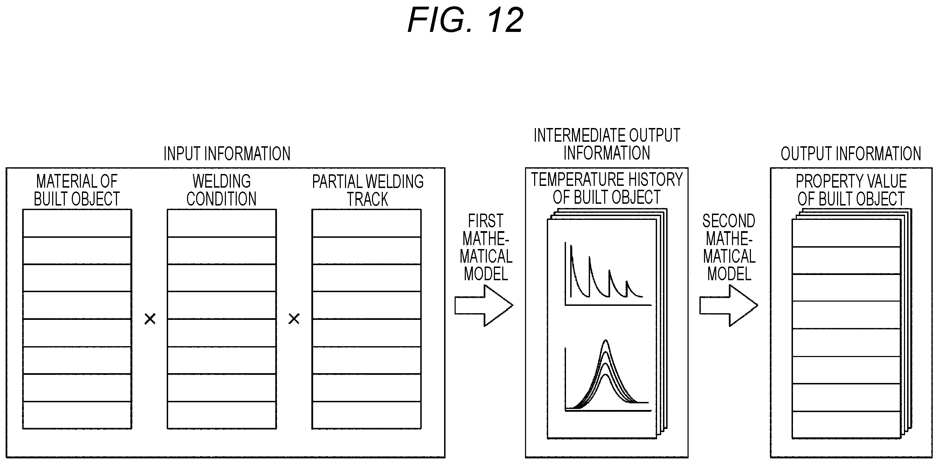

Fig. 12 is a diagram illustrating relations between input information, intermediate output information, and output information using mathematical models.

Items of the input information including a material of a built object, a welding condition, and a partial welding track each include a plurality of input subitems. The intermediate output information is related to each combination of the input subitems by a separate first mathematical model. In addition, each input subitem of the intermediate output information is related to each input subitem of the output information by a second mathematical model. Here, information regarding a temperature history of the built object will be described as an example of the intermediate output information.

When the material of the built object such as a filler metal is heated according to the welding condition and melted and solidified along a predetermined welding track, the temperature history of the built object (weld bead) to be formed differs depending on the conditions in the items described above. Therefore, properties such as mechanical strength and metal structure of the built object to be formed also differ depending on the conditions.

In a case of estimating the property values of the built object, even when it is difficult to directly estimate the properties of the built object based on each item (each condition) of the input information, if the temperature history can be understood for each item, it may be easier to estimate the properties of the built object based on the temperature history. Therefore, in a case of relating the input information to the properties of the built object which are the output information, a two-step relation is performed including first relating each item of the input information to the temperature history, which is the intermediate output information, and then relating the temperature history to each property value of the built object, which is the output information. Accordingly, compared with the case in which the input information and the output information are directly related, it is possible to relate and estimate with higher precision.

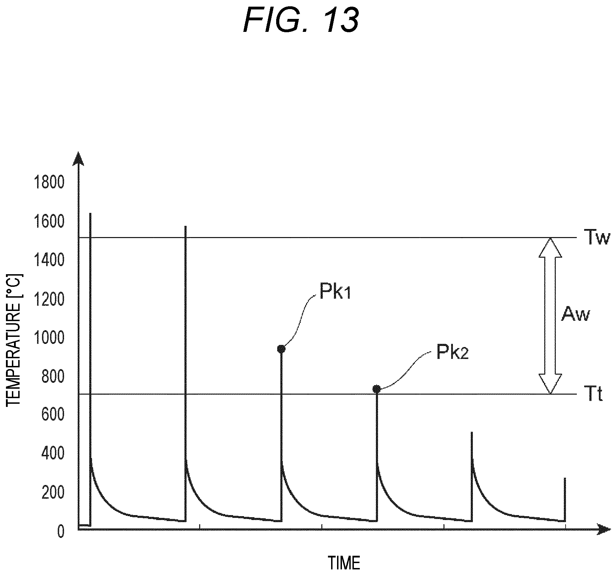

Fig. 13 is a graph showing a temperature history at a specific position of a weld bead to be formed during building. As shown in Fig. 13, repeatedly deposited weld beads themselves are melted and solidified to become a weld bead, then heat is input again by a weld bead deposited on an upper layer, and heating (it may be melting when the heated layer is an adjacent layer) and cooling are repeated. Regarding each peak of the temperature history, since the higher the layer above the weld bead at the specific position, the further away from the specific position, the temperature is decreased.

Assuming that a melting point Tw of the weld bead is 1534°C, which is the melting point of iron (carbon steel), and a transformation point Tt of the weld bead (the A1 transformation point of carbon steel) is 723°C, a material of the weld bead after solidification is substantially determined by the temperature history in a range from the transformation point Tt to Tw equal to or lower than the melting point. That is, although heating and cooling are repeated in additive manufacturing, a factor that affects a structure of the built object is the temperature history in a range Aw described above. Therefore, by extracting a feature amount of the temperature history in the range (inspection temperature range) Aw from the transformation point Tt to Tw equal to or lower than the melting point, the properties of the built object can be predicted.

For example, among a plurality of peaks shown in Fig. 13, peaks exceeding the melting point Tw and peaks below the transformation point Tt are ignored. Then, among peaks in the inspection temperature range Aw from the transformation point Tt to the melting point Tw, a temperature of the low-temperature-side local maximum point Pk2 that is closest to the transformation point Tt and a temperature of the high-temperature-side local maximum point Pk1 that is second closest to the transformation point Tt are extracted. These temperatures of the high-temperature-side local maximum point Pk1 and the low-temperature-side local maximum point Pk2 are set as the feature amount of the temperature history, that is, the intermediate output information.

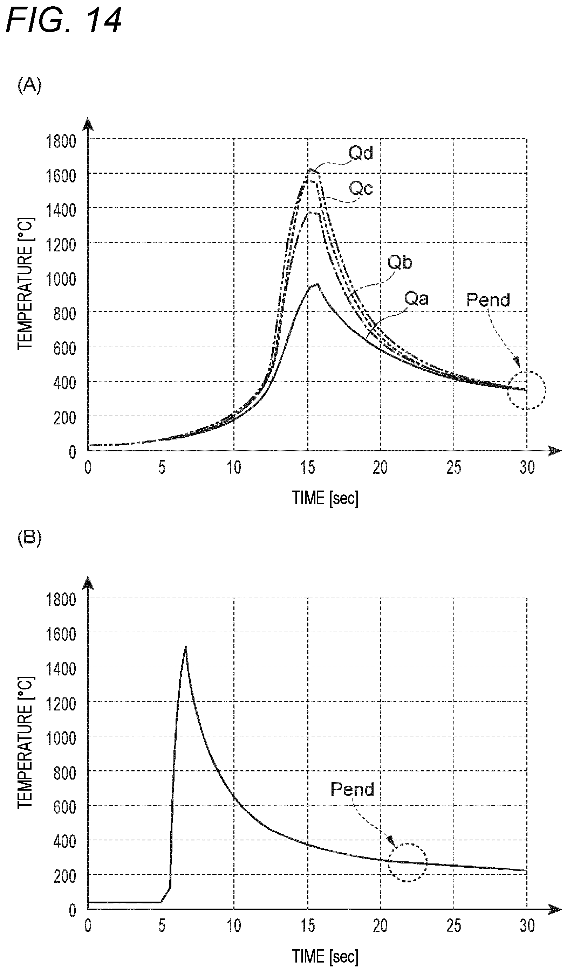

Fig. 14 are graphs showing a difference in a cooling property when a bead is formed with different heat inputs, (A) is a graph showing a temperature change property in a case of a relatively high heat input, and (B) is a graph showing a temperature change property in a case of a relatively low heat input.

As shown in (A) of Fig. 14, even though the heat input is increased in order from Qa to Qb, Qc, and Qd, a time until cooling to about 350°C does not change much, and in this case the time is about 15 seconds (see Pend). Meanwhile, as shown in (B) of Fig. 14, when the heat input is relatively low, if a time of being cooled is about 15 seconds, it is cooled down to about 300°C (see Pend). That is, the higher the heat input, the slower the cooling rate, and the lower the heat input, the faster the cooling rate. Therefore, the cooling rate depends on the heat input, and when the temperature of the low-temperature-side local maximum point Pk2 is known, a structure of the weld bead can be predicted.

Further, by predicting the structure by combining the temperature of the low-temperature-side local maximum point Pk2 and the temperature of the high-temperature-side local maximum point Pk1, prediction accuracy can be improved compared with a case in which prediction is made based on only one of the temperatures.

Thus, when the temperature history, which is a factor determining the material of the weld bead, can be specified based on the feature amount described above, the material of the weld bead formed in the temperature history can be predicted with relatively high accuracy. Therefore, items of intermediate processing information are set as determinants of the material of the building material, and the input information and the intermediate output information are related by the first mathematical model and the intermediate output information and the output information are related by the second mathematical model. Accordingly, it is possible to expect an effect that the input information and the output information can be related more accurately than when the input information and the output information are directly related.

Regarding this temperature history, temperature data at a predetermined position may be acquired by monitoring the temperature of the built object by the temperature sensor 30 (Fig. 1) during building. The temperature sensor 30 may detect the temperature in cooperation with the shape sensor 32. That is, the shape sensor 32 detects the shape of the built object, and the temperature sensor 30 detects a temperature at a specific position of the built object.

In addition, a temperature simulation calculation may be performed based on the type of filler metal or the welding condition.

An example of a basic equation used for temperature simulation will be shown below.
(Equation 1) $\left\{H\right\} t + Δt = \left\{H\right\} t - Δt \left[C\right] \left[K\right] \left\{T\right\} t - Δt \left[C\right] \left\{F\right\} t + Δt \left\{Q\right\} t$ (1)

The basic equation (1) is an equation for heat transfer analysis by a so-called explicit finite element method (FEM). Each parameter in the basic equation (1) is as follows.
H: enthalpy
C: reciprocal of node volume
K: heat conduction matrix
F: heat flux
Q: volumetric heat generation

Accordingly, a nonlinear phenomenon such as latent heat release can be calculated with high accuracy by using the enthalpy as an unknown quantity. It should be noted that a heat input during welding is input as a parameter for the volumetric heat generation or the heat flux.

In the above-mentioned basic equation (1), which is a three-dimensional heat conduction equation, the heat input during building (welding) may be applied to a welding region in accordance with the travel speed.

In addition, when the weld bead is short, heat input may be applied to the entire one bead.

### <Other Database Configuration Examples>

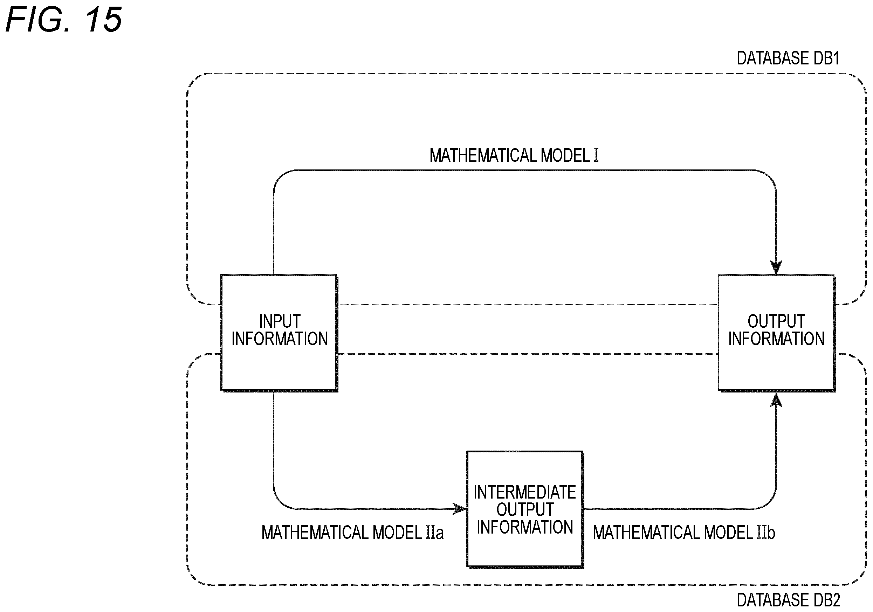

Fig. 15 is a diagram illustrating a state in which a plurality of databases in which input information and output information are related are selectively used.

In the first database configuration example described above, the input information and the output information are related by using a mathematical model I, and a database DB 1 (database 61 described above) is constructed by the mathematical model I.

In addition, in the second database configuration example, the input information and the intermediate output information are related by using a mathematical model IIa and the intermediate output information and the output information are related by using a mathematical model IIb, and a database DB2 (database 61 described above) is constructed by the mathematical model IIa and the mathematical model IIb.

Then, the constructed databases DB 1 and DB2 are compared, and a database whose output information is more accurate with respect to the input information is used as the database 61 shown in Fig. 4. For the comparison of the databases DB 1 and DB2, for example, a set of input information and output information (teaching data) whose correspondence is known is used to determine accuracy of output with respect to input.

Accordingly, by constructing a plurality of databases and selectively using a more accurate database, accuracy of predicting a property value of a built object is improved, and creation of a more appropriate building plan can be assisted.

indicating each of a material of a built object, a welding condition of weld beads, and a welding track when the built object is manufactured by additive manufacturing, in a desired shape, the weld beads formed by melting and solidifying a filler metal fed from a welding head, the method including:
a step of respectively generating a first mathematical model and a second mathematical model, the first mathematical model relating input information to intermediate output information, the input information including items of the material of the built object, the welding condition, and the welding track, the intermediate output information including information regarding a temperature history of the built object when additive manufacturing is performed under conditions of the items of the input information, the second mathematical model relating the intermediate output information to output information including a property value of the built object;
a step of creating a database indicating a correspondence between the input information and the output information by using the first mathematical model and the second mathematical model;
a step of searching the database to obtain the temperature history, the material of the built object, the welding condition, and the welding track corresponding to a target property value of the built object to be manufactured; and
a step of presenting the obtained material of the built object, welding condition, and welding track corresponding to the target property value, wherein
each item of the input information includes a plurality of input subitems that are mutually different,
the intermediate output information includes individual intermediate values corresponding to the input subitems,
the output information includes a plurality of individual property values corresponding to the individual intermediate values, and
in the step of generating the first mathematical model and the second mathematical model, the input subitems are respectively related to the individual intermediate values by the first mathematical model, and the individual intermediate values are respectively related to the individual property values by the second mathematical model.

According to the building plan assistance method, treating the temperature history, which is a representative process feature of the built object, as the intermediate output information makes it easier to correlate the input information with the properties of the built object such as a hardness. In addition, regarding the temperature history, it is possible not only to use a value measured by actually building, but also to calculate the value by temperature simulation. Therefore, data can be easily supplemented, and database construction is facilitated.

The information regarding the material in the input information includes information regarding a type of the filler metal.

According to the building plan assistance method, since a viscosity of the weld bead during melting varies depending on the type of filler metal and the cross-sectional shape of the weld bead tends to vary accordingly, a welding condition and a track plan suitable for each filler metal can be set by creating a mathematical model for each type of filler metal.

The information regarding the welding condition in the input information may include information regarding at least one of a welding current, a welding voltage, a travel speed, a width of a pitch between adjacent welding tracks, an interpass time of moving from a specific welding track to another welding track among a plurality of welding tracks, a target position of the welding head, a welding position of the welding head, and a speed of feeding the filler metal when each weld bead is formed, or a combination thereof.

According to the building plan assistance method, since all the information can be monitored during building, data can be easily collected.

The information regarding the welding track in the input information may include information regarding at least one of passes forming each weld bead, the number of the passes, an order of forming each weld bead, and a cross-sectional shape of each weld bead.

According to the building plan assistance method, since all the information can be monitored during building, data can be easily collected.

The welding track may be a partial welding track corresponding to an element shape obtained by cutting out a part of an entire shape of the built object.

According to the building plan assistance method, by cutting out the shape of the built object into several patterns of element shapes and planning a welding condition and a welding track for each element shape, a building plan can be easily created. By creating, in advance, a partial welding track corresponding to each element shape in various variations, even for a built object having a complicated shape, a building plan can be created without requiring complicated processing.

The output information may include information regarding at least one of an index indicating a state of a metal structure, a hardness, and a mechanical strength of the built object.

According to the building plan assistance method, the construction of a database is facilitated by using a state of a metal structure, a hardness (Vickers hardness, etc.), and a mechanical strength, which can be tested relatively easily and in a short period of time.

The mathematical model may be a learned model obtained by machine-learning of a relation between the input information and the output information.

According to the building plan assistance method, by constructing a mathematical model by machine learning, a part without test data can be complemented, and the prediction accuracy is improved as the data is complemented. In addition, since data corresponding to input and output can be collected from basic built objects such as wall building or block building, machine learning data can be easily prepared.

An input range of the input information may be restricted to a range limited based on a predetermined condition.

According to the building plan assistance method, by setting a limit on an input range so as not to deviate from a recommended range for driving a building device, a recommended condition for using a filler metal, etc., it is possible to avoid inputting a condition that is likely to cause a trouble due to a failure in a device or a material.

A building plan assistance device for assisting creation of a building plan indicating each of a material of a built object, a welding condition of each of weld beads, and a welding track when the built object is manufactured by additive manufacturing, in a desired shape, the weld beads formed by melting and solidifying a filler metal fed from a welding head, the device including:
a mathematical model generation unit configured to generate a mathematical model that relates input information to output information, the input information including items of the material of the built object, the welding condition, and the welding track, the output information including a property value of the built object when additive manufacturing is performed under conditions of the input information;
a database creation unit configured to create a database indicating a correspondence between the input information and the output information by using the mathematical model;
a search unit configured to search the database to obtain the material of the built object, the welding condition, and the welding track corresponding to a target property value of the built object to be manufactured; and
an output unit configured to present the obtained material of the built object, welding condition, and welding track corresponding to the target property value, wherein
each item of the input information includes a plurality of input subitems that are mutually different,
the output information includes a plurality of individual property values corresponding to the input subitems, and
the mathematical model generation unit respectively relates the input subitems of the input information to the individual property values by the mathematical model.

According to the building plan assistance device, even in additive manufacturing in which welding is complicated and the number of passes tends to be enormous, creation of an appropriate building plan can be assisted by preparing a database in advance.

A building plan assistance device for assisting creation of a building plan indicating each of a material of a built object, a welding condition of weld beads, and a welding track when the built object is manufactured by additive manufacturing, in a desired shape, the weld beads formed by melting and solidifying a filler metal fed from a welding head, the device including:
a mathematical model generation unit configured to respectively generate a first mathematical model and a second mathematical model, the first mathematical model relating input information to intermediate output information, the input information including items of the material of the built object, the welding condition, and the welding track, the intermediate output information including information regarding a temperature history of the built object when additive manufacturing is performed under conditions of the items of the input information, the second mathematical model relating the intermediate output information to output information including a property value of the built object;
a database creation unit configured to create a database indicating a correspondence between the input information and the output information by using the first mathematical model and the second mathematical model;
a search unit configured to search the database to obtain the temperature history, the material of the built object, the welding condition, and the welding track corresponding to a target property value of the built object to be manufactured; and
an output unit configured to present the obtained material of the built object, welding condition, and welding track corresponding to the target property value, wherein
each item of the input information includes a plurality of input subitems that are mutually different,
the intermediate output information includes individual intermediate values corresponding to the input subitems,
the output information includes a plurality of individual property values corresponding to the individual intermediate values, and
the mathematical model generation unit respectively relates the input subitems to the individual intermediate values by the first mathematical model, and respectively relates the individual intermediate values to the individual property values by the second mathematical model.

According to the building plan assistance device, treating the temperature history, which is a representative process feature of the built object, as the intermediate output information makes it easier to correlate the input information with the properties of the built object such as a hardness. In addition, regarding the temperature history, it is possible not only to use a value measured by actually building, but also to calculate the value by temperature simulation. Therefore, data can be easily supplemented, and database construction is facilitated.

### REFERENCE SIGNS LIST

11: building device
13: building control device
15: welding torch
17: welding robot
21: robot control device
23: filler metal feeding unit
25: welding power source
27: base plate
29: reel
30: temperature sensor
31: wire feed sensor
32: shape sensor
33: input and output interface
35: storage unit
37: operation panel
41: CPU
43: storage unit
45: input and output interface
47: input unit
49: output unit
51: basic information table
53: mathematical model generation unit
55: database creation unit
57: building plan unit
59: search unit
61: database
63: initial database
65, 64A: built object
65A: main body (element shape)
65B: first protrusion (element shape)
65C: second protrusion (element shape)

## Claims

1. A computer-implemented building plan assistance method for assisting creation of a building plan indicating each of a material of a built object (65), a welding condition of weld beads (28), and a welding track (A, B, C) when the built object (65) is manufactured by depositing, in a desired shape, the weld beads (28) formed by melting and solidifying a filler metal (M) fed from a welding head, the method comprising:
a step of creating (S12) a building plan according to input information of the built object (65), the input information including items of the material of the built object (65), the welding condition, and the welding track (A, B, C), wherein information regarding the material in the input information includes information regarding a type of the filler metal (M);
wherein a property value of the built object (65) is obtained by:
a step of predicting (S13), by the building control device (13) and with reference to an initial database (63) in which relations between the building plan and the property value are registered in advance, properties of the built object (65) to be additively manufactured according to the created building plan, and
a step of driving (S15), by the building control device (13), a robot control device (21) in accordance with the created building plan, causing, by the building control device (13), a building device (11) to additively manufacture the built object (65), wherein a test sample is cut out from the additively-manufactured built object (65), and testing (S16) at least a mechanical strength and/or a metal structure of the test sample;
a step of generating a mathematical model (62) that relates the input information to output information, the output information including the property value of the built object (65) when additive manufacturing is performed under conditions of the items of the input information, wherein the mathematical model (62) is generated by comparing (S17) the prediction result and the test result of the properties of the built object (65) according to the same building plan obtained in this way such that a difference between the two results is reduced, wherein
each item of the input information includes a plurality of input subitems that are mutually different, wherein input subitems are filler metals, a welding current, a welding voltage, a travel speed, an element shape, a pass, and/or a number of passes, for items,
the output information includes a plurality of individual property values corresponding to the input subitems, and
in the step of generating the mathematical model (62), the input subitems of the input information are respectively related to the individual property values by the mathematical model (62);
a step of creating (S19) a database (61) showing a correspondence between the input information and the output information by using the mathematical model (62);
a step of searching the database (61) to obtain conditions of the items of the material of the built object (65), the welding condition, and the welding track (A, B, C) corresponding to a target property value of the built object (65); and
a step of presenting, by an output unit (49), the obtained material of the built object (65), welding condition, and welding track (A, B, C) corresponding to the target property value.

2. The building plan assistance method according to claim 1, wherein information regarding the welding condition in the input information includes information regarding at least one of a welding current, a welding voltage, a travel speed, a width of a pitch between adjacent welding tracks (A, B, C), an interpass time of moving from a specific welding track (A, B, C) to another welding track (A, B, C) among a plurality of welding tracks (A, B, C), a target position of the welding head, a welding position of the welding head, and a speed of feeding the filler metal (M) when each weld bead (28) is formed, or a combination thereof.

3. The building plan assistance method according to claim 1 or 2, wherein information regarding the welding track (A, B, C) in the input information includes information regarding at least one of passes forming each weld bead (28), the number of the passes, an order of forming each weld bead (28), and a cross-sectional shape of each weld bead (28).

4. The building plan assistance method according to any one of claims 1 to 3, wherein the welding track (A, B, C) is a partial welding track (A, B, C) corresponding to an element shape obtained by cutting out a part of an entire shape of the built object (65).

5. The building plan assistance method according to any one of claims 1 to 4, wherein the output information includes information regarding at least one of an index indicating a metal structure, a hardness, and a mechanical strength of the built object (65).

6. The building plan assistance method according to claim 1 or 2, wherein the mathematical model (62) is a learned model obtained by machine-learning of a relation between the input information and the output information.

7. The building plan assistance method according to claim 1 or 2, wherein an input range of the input information is restricted to a range limited based on a predetermined condition for using a filler metal.

8. A building plan assistance device for assisting creation of a building plan indicating each of a material of a built object (65), a welding condition of each of weld beads (28), and a welding track (A, B, C) when the built object (65) is manufactured by additive manufacturing, in a desired shape, the weld beads (28) formed by melting and solidifying a filler metal (M) fed from a welding head, the device comprising:
a building control device (13) configured to create (S12) a building plan according to input information of the built object (65), the input information including items of the material of the built object (65), the welding condition, and the welding track (A, B, C), wherein information regarding the material in the input information includes information regarding a type of the filler metal (M);
wherein a property value of the built object (65) is obtained by the building control device (13) that is further configured to:
predict (S13), with reference to an initial database (63) in which relations between the building plan and the property value are registered in advance, properties of the built object (65) to be additively manufactured according to the created building plan, and
drive (S15) a robot control device (21) in accordance with the created building plan, cause a building device (11) to additively manufacture the built object (65), wherein a test sample is cut out from the additively-manufactured built object (65), and test (S16) at least a mechanical strength and/or a metal structure of the test sample;
a mathematical model generation unit (53) configured to generate a mathematical model (62) that relates input information to output information, the output information including a property value of the built object (65) when additive manufacturing is performed under conditions of the input information, wherein the mathematical model generation unit (53) is configured to generate the mathematical model (62) by comparing (S17) the prediction result and the test result of the properties of the built object (65) according to the same building plan obtained in this way such that a difference between the two results is reduced, wherein
each item of the input information includes a plurality of input subitems that are mutually different, wherein input subitems are filler metals, a welding current, a welding voltage, a travel speed, an element shape, a pass, and/or a number of passes, for items,
the output information includes a plurality of individual property values corresponding to the input subitems, and
in the step of generating the mathematical model (62), the input subitems of the input information are respectively related to the individual property values by the mathematical model (62);
a database creation unit (55) configured to create (S19) a database (61) indicating a correspondence between the input information and the output information by using the mathematical model (62);
a search unit (59) configured to search the database (61) to obtain the material of the built object (65), the welding condition, and the welding track (A, B, C) corresponding to a target property value of the built object (65); and
an output unit (49) configured to present the obtained material of the built object (65), welding condition, and welding track (A, B, C) corresponding to the target property value.

## Patentansprüche

1. Ein computerimplementiertes Bauplanunterstützungsverfahren, zur Unterstützung beim Erstellen eines Bauplans, der jeweils ein Material eines aufgebauten Objekts (65), eine Schweißbedingung der Schweißraupen (28) sowie eine Schweißbahn (A, B, C) angibt, wenn das aufgebaute Objekt (65) durch Aufbringen der Schweißraupen (28) in einer gewünschten Form hergestellt wird, wobei die Schweißraupen (28) durch Schmelzen und Erstarren eines von einem Schweißkopf zugeführten Zusatzwerkstoffs (M) gebildet werden, wobei das Verfahren Folgendes umfasst:
einen Schritt zum Erstellen (S12) eines Bauplans gemäß Eingabeinformationen des aufgebauten Objekts (65), wobei die Eingabeinformationen Angaben zum Material des aufgebauten Objekts (65), zur Schweißbedingung und zur Schweißbahn (A, B, C) beinhalten, wobei die Informationen bezüglich des Materials in den Eingabeinformationen Angaben zur Art des Zusatzwerkstoffs (M) beinhalten;
wobei ein Eigenschaftswert des aufgebauten Objekts (65) ermittelt wird durch:
einen Schritt des Vorhersagens (S13), durch die Aufbausteuervorrichtung (13) unter Bezugnahme auf eine Anfangsdatenbank (63), in der Beziehungen zwischen dem Bauplan und dem Eigenschaftswert vorab registriert sind, von Eigenschaften des entsprechend dem erstellten Bauplan additiv herzustellenden aufgebauten Objekts (65), und
einen Schritt des Ansteuerns (S15), durch die Aufbausteuervorrichtung (13,) einer Robotersteuervorrichtung (21) gemäß dem erstellten Bauplan, wodurch die Aufbausteuervorrichtung (13) eine Aufbauvorrichtung (11) veranlasst, das aufgebaute Objekt (65) additiv zu fertigen, wobei aus dem additiv gefertigten aufgebauten Objekt (65) ein Prüfmuster ausgeschnitten wird und mindestens eine mechanische Festigkeit und/oder eine Metallstruktur des Prüfmusters geprüft wird (S16);
einen Schritt zum Erzeugen eines mathematischen Modells (62), das die Eingabeinformationen mit Ausgabeinformationen in Beziehung setzt, wobei die Ausgabeinformationen den Eigenschaftswert des aufgebauten Objekts (65) beinhalten, wenn die additive Fertigung unter den Bedingungen der Elemente der Eingabeinformationen durchgeführt wird, wobei das mathematische Modell (62) durch Vergleichen (S17) des Vorhersageergebnisses und des Prüfergebnisses der Eigenschaften des aufgebauten Objekts (65) gemäß demselben, auf diese Weise erhaltenen Bauplan erzeugt wird, sodass eine Differenz zwischen den beiden Ergebnissen verringert wird, wobei
jedes Element der Eingabeinformationen eine Vielzahl von Eingabeunterelementen beinhaltet, die sich voneinander unterscheiden, wobei Eingabeunterelemente Zusatzwerkstoffe, einen Schweißstrom, eine Schweißspannung, eine Vorschubgeschwindigkeit, eine Elementform, einen Schweißdurchgang und/oder eine Anzahl von Schweißdurchgängen beinhalten,
die Ausgangsinformationen eine Vielzahl von einzelnen Eigenschaftswerten beinhalten, die den Eingabeunterelementen entsprechen, und
im Schritt des Erzeugens des mathematischen Modells (62) die Eingabeunterelemente der Eingabeinformationen jeweils durch das mathematische Modell (62) mit den einzelnen Eigenschaftswerten in Beziehung gesetzt werden;
einen Schritt des Erstellens (S19) einer Datenbank (61), die eine Entsprechung zwischen den Eingabeinformationen und den Ausgangsinformationen unter Verwendung des mathematischen Modells (62) darstellt;
einen Schritt des Durchsuchens der Datenbank (61), um Angaben zum Material des aufgebauten Objekts (65), zur Schweißbedingung und zur Schweißbahn (A, B, C) zu erhalten, die einem Ziel-Eigenschaftswert des aufgebauten Objekts (65) entsprechen; und
einen Schritt des Präsentierens, durch eine Ausgabeeinheit (49), des erhaltenen Materials des aufgebauten Objekts (65), der Schweißbedingung und der Schweißbahn (A, B, C), die dem Ziel-Eigenschaftswert entsprechen,

2. Das Bauplanunterstützungsverfahren nach Anspruch 1, wobei die Informationen bezüglich der Schweißbedingung in den Eingabeinformationen Informationen bezüglich eines von folgenden Punkten beinhalten: einen Schweißstrom, eine Schweißspannung, eine Vorschubgeschwindigkeit, eine Breite des Abstands zwischen benachbarten Schweißbahnen (A, B, C), eine Zwischenpasszeit für die Bewegung von einer bestimmten Schweißbahn (A, B, C) zu einer anderen Schweißbahn (A, B, C) unter einer Vielzahl von Schweißbahnen (A, B, C), eine Zielposition des Schweißkopfes, eine Schweißposition des Schweißkopfes, und eine Zuführgeschwindigkeit des Zusatzwerkstoffs (M) beim Bilden jeder Schweißraupe (28), oder eine Kombination davon.

3. Das Bauplanunterstützungsverfahren nach Anspruch 1 oder 2, wobei Informationen bezüglich der Schweißbahn (A, B, C) in den Eingabeinformationen Informationen bezüglich mindestens eines von folgenden Punkten beinhalten: die Schweißdurchgänge, die jede Schweißraupe (28) bilden, die Anzahl der Schweißdurchgänge, die Reihenfolge der Bildung jeder Schweißraupe (28) und die Querschnittsform jeder Schweißraupe (28).

4. Das Bauplanunterstützungsverfahren nach irgendeinem der Ansprüche von 1 bis 3, wobei die Schweißbahn (A, B, C) eine partielle Schweißbahn (A, B, C) ist, die einer Elementform entspricht, die durch Ausschneiden eines Teils der Gesamtform des aufgebauten Objekts (65) erhalten wird.

5. Das Bauplanunterstützungsverfahren nach irgendeinem der Ansprüche von 1 bis 4, wobei die Ausgabeinformationen Informationen bezüglich mindestens eines von folgenden Punkten beinhalten: einen Index, der eine Metallstruktur angibt, eine Härte, und eine mechanische Festigkeit des aufgebauten Objekts (65).

6. Das Bauplanunterstützungsverfahren nach Anspruch 1 oder 2, wobei das mathematische Modell (62) ein erlerntes Modell ist, das durch maschinelles Lernen aus einer Beziehung zwischen den Eingabeinformationen und den Ausgabeinformationen erhalten wird.

7. Das Bauplanunterstützungsverfahren nach Anspruch 1 oder 2, wobei ein Eingabebereich der Eingabeinformationen auf einen Bereich beschränkt ist, der auf der Grundlage einer vorbestimmten Bedingung für die Verwendung eines Zusatzwerkstoffs begrenzt ist.

8. Eine Bauplanunterstützungsvorrichtung zur Unterstützung bei der Erstellung eines Bauplans, der jeweils ein Material eines aufgebauten Objekts (65), die Schweißbedingung der Schweißraupen (28) sowie eine Schweißbahn (A, B, C) angibt, wenn das aufgebaute Objekt (65) mittels additiver Fertigung in einer gewünschten Form hergestellt wird, wobei die Schweißraupen (28) durch Schmelzen und Erstarren eines von einem Schweißkopf zugeführten Zusatzwerkstoffs (M) gebildet werden, wobei die Vorrichtung Folgendes umfasst:
eine Aufbausteuervorrichtung (13), die dazu konfiguriert ist, einen Bauplan entsprechend den Eingabeinformationen des aufgebauten Objekts (65) zu erstellen (S12), wobei die Eingabeinformationen Angaben zum Material des aufgebauten Objekts (65), zur Schweißbedingung und zur Schweißbahn (A, B, C) beinhalten, wobei Informationen bezüglich des Materials in den Eingabeinformationen Informationen zur Art des Zusatzwerkstoffs (M) beinhalten;
wobei ein Eigenschaftswert des aufgebauten Objekts (65) von der Aufbausteuervorrichtung (13) erhalten wird, die ferner dazu konfiguriert ist:
Vorhersagen (S13), unter Bezugnahme auf eine Anfangsdatenbank (63), in der Beziehungen zwischen dem Bauplan und dem Eigenschaftswert vorab registriert sind, von Eigenschaften des entsprechend dem erstellten Bauplan additiv herzustellenden aufgebauten Objekts (65), und
Ansteuern (S15) einer Robotersteuervorrichtung (21) gemäß dem erstellten Bauplan, um eine Aufbauvorrichtung (11) dazu zu veranlassen, das aufgebaute Objekt (65) additiv zu fertigen, wobei aus dem additiv gefertigten aufgebauten Objekt (65) ein Prüfmuster ausgeschnitten wird und mindestens eine mechanische Festigkeit und/oder eine Metallstruktur des Prüfmusters geprüft wird (S16);
eine Einheit zur Erzeugung eines mathematischen Modells (53), die dazu konfiguriert ist, ein mathematisches Modell (62) zu erzeugen, das Eingabeinformationen mit Ausgabeinformationen in Beziehung setzt, wobei die Ausgabeinformationen einen Eigenschaftswert des aufgebauten Objekts (65) beinhalten, wenn die additive Fertigung unter den Bedingungen der Eingabeinformationen durchgeführt wird, wobei die Einheit zur Erzeugung eines mathematischen Modells (53) dazu konfiguriert ist, das mathematische Modell (62) zu erzeugen durch Vergleichen (S17) des Vorhersageergebnisses und des Prüfergebnisses der Eigenschaften des aufgebauten Objekts (65) gemäß demselben, auf diese Weise erhaltenen Bauplan, sodass eine Differenz zwischen den beiden Ergebnissen verringert wird, wobei
jedes Element der Eingabeinformationen eine Vielzahl von Eingabeunterelementen beinhaltet, die sich voneinander unterscheiden, wobei Eingabeunterelemente Zusatzwerkstoffe, einen Schweißstrom, eine Schweißspannung, eine Vorschubgeschwindigkeit, eine Elementform, einen Schweißdurchgang und/oder eine Anzahl von Schweißdurchgängen beinhalten,
die Ausgangsinformationen eine Vielzahl von einzelnen Eigenschaftswerten beinhalten, die den Eingabeunterelementen entsprechen, und
im Schritt des Erzeugens des mathematischen Modells (62) die Eingabeunterelemente der Eingabeinformationen jeweils durch das mathematische Modell (62) mit den einzelnen Eigenschaftswerten in Beziehung gesetzt werden;
eine Datenbank-Erzeugungseinheit (55), die dazu konfiguriert ist, unter Verwendung des mathematischen Modells (62) eine Datenbank (61) zu erzeugen (S19), die eine Entsprechung zwischen den Eingabeinformationen und den Ausgabeinformationen angibt;
eine Sucheinheit (59), die dazu konfiguriert ist, die Datenbank (61) zu durchsuchen, um das Material des aufgebauten Objekts (65), die Schweißbedingung und die Schweißbahn (A, B, C) zu erhalten, die einem Ziel-Eigenschaftswert des aufgebauten Objekts (65) entsprechen; und
eine Ausgabeeinheit (49), die dazu konfiguriert ist, das erhaltene Material des aufgebauten Objekts (65), die Schweißbedingung und die Schweißbahn (A, B, C) entsprechend dem Ziel-Eigenschaftswert zu präsentieren.

## Revendications

1. Un procédé d'aide au plan de construction mis en œuvre par ordinateur destiné à aider à créer un plan de construction indiquant à la fois le matériau d'un objet construit (65), une condition de soudage des cordons de soudure (28), ainsi qu'un tracé de soudage (A, B, C), lorsque l'objet construit (65) est fabriqué par fabrication additive, selon une forme souhaitée, les cordons de soudure (28) étant formés par fusion et solidification d'un métal d'apport (M) fourni depuis une tête de soudage, le procédé comprenant :
une étape de création (S12) d'un plan de construction selon des informations d'entrée de l'objet construit (65), lesdites informations d'entrée incluant des éléments concernant le matériau de l'objet construit (65), la condition de soudage et le tracé de soudage (A, B, C), sachant que les informations relatives au matériau incluent des informations concernant un type de métal d'apport (M) ;
sachant qu'une valeur de propriété de l'objet construit (65) est obtenue par :
une étape de prédiction (S13), par le dispositif de commande de construction (13) et en se référant à une base de données initiale (63) dans laquelle des relations entre le plan de construction et la valeur de propriété sont enregistrées à l'avance, de propriétés de l'objet construit (65) devant être fabriqué par fabrication additive conformément au plan de construction créé, et une étape de commande (S15), par le dispositif de commande de construction (13), d'un dispositif de commande de robot (21) conformément au plan de construction créé, ce qui amène, par le dispositif de commande de construction (13), un dispositif de construction (11) à fabriquer par fabrication additive l'objet construit (65), sachant qu'un échantillon d'essai est découpé à partir de l'objet construit (65) fabriqué par fabrication additive, et d'essai (S16) d'une résistance mécanique et/ou d'une structure métallique de l'échantillon d'essai ;
une étape de génération d'un modèle mathématique (62) qui met en relation les informations d'entrée avec des informations de sortie, les informations de sortie incluant la valeur de propriété de l'objet construit (65) lorsque la fabrication additive est réalisée dans les conditions correspondant aux éléments des informations d'entrée, sachant que le modèle mathématique (62) est généré par comparaison (S17) du résultat de prédiction et du résultat d'essai des propriétés de l'objet construit (65) selon le même plan de construction ainsi obtenu, de manière qu'une différence entre les deux résultats soit réduite, sachant que
chaque élément des informations d'entrée incluant une pluralité de sous-éléments d'entrée qui sont mutuellement différents, sachant que les sous-éléments d'entrée sont des métaux d'apport, un courant de soudage, une tension de soudage, une vitesse d'avance, une forme d'élément, un passage de soudage et/ou un nombre de passages de soudage, pour les éléments,
les informations de sortie incluent une pluralité de valeurs de propriétés individuelles correspondant aux sous-éléments d'entrée, et que,
dans l'étape de génération du modèle mathématique (62), les sous-éléments d'entrée des informations d'entrée sont respectivement mis en relation avec les valeurs de propriétés individuelles par le modèle mathématique (62) ;
une étape de création (S19) d'une base de données (61) montrant une correspondance entre les informations d'entrée et les informations de sortie à l'aide du modèle mathématique (62) ;
une étape de recherche dans la base de données (61) pour obtenir des conditions relatives au matériau de l'objet construit (65), à la condition de soudage et au tracé de soudage (A, B, C) correspondant à une valeur de propriété cible de l'objet construit (65) ; et
une étape de présentation, par une unité de sortie (49), du matériau obtenu de l'objet construit (65), la condition de soudage et le tracé de soudage (A, B, C) correspondant à la valeur de propriété cible.

2. Le procédé d'aide au plan de construction d'après la revendication 1, sachant que des informations concernant la condition de soudage incluent des informations concernant au moins l'un parmi : un courant de soudage, une tension de soudage, une vitesse d'avance, une largeur d'espacement entre des tracés de soudage adjacents (A, B, C), un temps entre les passages de soudage nécessaire pour passer d'un tracé de soudage spécifique (A, B, C) à un autre tracé de soudage (A, B, C) parmi une pluralité de tracés de soudage (A, B, C), une position cible de la tête de soudage, une position de soudage de la tête de soudage, et la vitesse d'alimentation du métal d'apport (M) lors de la formation de chaque cordon de soudure (28), ou une combinaison de ceux-ci.

3. Le procédé d'aide au plan de construction d'après la revendication 1 ou 2, sachant que des informations concernant le tracé de soudage (A, B, C) dans les informations d'entrée incluent des informations concernant au moins l'un parmi : des passages de soudage formant chaque cordon de soudure (28), un nombre de passages de soudage, un ordre de formation de chaque cordon de soudure (28) et une forme en coupe transversale de chaque cordon de soudure (28).

4. Le procédé d'aide au plan de construction d'après l'une quelconque des revendications de 1 à 3, sachant que le tracé de soudage (A, B, C) est un tracé de soudage partiel (A, B, C) correspondant à une forme d'élément obtenue en découpant une partie de la forme entière de l'objet construit (65).

5. Le procédé d'aide au plan de construction d'après l'une quelconque des revendications de 1 à 4, sachant que les informations de sortie incluent des informations concernant au moins l'un parmi un indice indiquant une structure métallique, une dureté et une résistance mécanique de l'objet construit (65).

6. Le procédé d'aide au plan de construction d'après la revendication 1 ou 2, sachant que le modèle mathématique (62) est un modèle appris obtenu par apprentissage automatique d'une relation entre les informations d'entrée et les informations de sortie.

7. Le procédé d'aide au plan de construction d'après la revendication 1 ou 2, sachant que la plage d'entrée des informations d'entrée est restreinte à une plage limitée sur la base d'une condition prédéterminée pour l'utilisation d'un métal d'apport.

8. Un dispositif d'aide au plan de construction destiné à aider à créer un plan de construction indiquant à la fois le matériau d'un objet construit (65), une condition de soudage de chacun des cordons de soudure (28), ainsi qu'un tracé de soudage (A, B, C), lorsque l'objet construit (65) est fabriqué par fabrication additive, selon une forme souhaitée, les cordons de soudure (28) étant formés par fusion et solidification d'un métal d'apport (M) fourni depuis une tête de soudage, le dispositif comprenant :
un dispositif de commande de construction (13) configuré pour créer (S12) un plan de construction selon des informations d'entrée de l'objet construit (65), lesdites informations d'entrée incluant des éléments concernant le matériau de l'objet construit (65), la condition de soudage et le tracé de soudage (A, B, C), sachant que les informations relatives au matériau dans les informations d'entrée incluent des informations concernant un type de métal d'apport (M) ;
sachant que la valeur de propriété de l'objet construit (65) est obtenue par le dispositif de commande de construction (13), lequel est en outre configuré pour :
prédire (S13), en se référant à une base de données initiale (63) dans laquelle des relations entre le plan de construction et la valeur de propriété sont enregistrées à l'avance, des propriétés de l'objet construit (65) devant être fabriqué par fabrication additive conformément au plan de construction créé, et
commander (S15) un dispositif de commande de robot (21) conformément au plan de construction créé, afin d'amener un dispositif de construction (11) à fabriquer par fabrication additive l'objet construit (65), sachant qu'un échantillon d'essai est découpé à partir de l'objet construit (65) fabriqué par fabrication additive, et tester (S16) au moins la résistance mécanique et/ou la structure métallique de l'échantillon d'essai ;
une unité de génération de modèle mathématique (53) configurée pour générer un modèle mathématique (62) qui met en relation des informations d'entrée avec des informations de sortie, les informations de sortie incluant une valeur de propriété de l'objet construit (65) lorsqu'une fabrication additive est réalisée dans les conditions correspondant aux informations d'entrée, sachant que l'unité de génération de modèle mathématique (53) est configurée pour générer le modèle mathématique (62) par comparaison (S17) du résultat de prédiction et du résultat d'essai des propriétés de l'objet construit (65) selon le même plan de construction ainsi obtenu, de manière qu'une différence entre les deux résultats soit réduite, sachant que
chaque élément des informations d'entrée incluant une pluralité de sous-éléments d'entrée qui sont mutuellement différents, sachant que les sous-éléments d'entrée sont des métaux d'apport, un courant de soudage, une tension de soudage, une vitesse d'avance, une forme d'élément, un passage de soudage et/ou un nombre de passages de soudage, pour les éléments,
les informations de sortie incluent une pluralité de valeurs de propriétés individuelles correspondant aux sous-éléments d'entrée, et que,
dans l'étape de génération du modèle mathématique (62), les sous-éléments d'entrée des informations d'entrée sont respectivement mis en relation avec les valeurs de propriétés individuelles par le modèle mathématique (62) ;
une unité de création de base de données (55) configurée pour créer (S19) une base de données (61) indiquant une correspondance entre les informations d'entrée et les informations de sortie à l'aide du modèle mathématique (62) ;
une unité de recherche (59) configurée pour effectuer une recherche dans la base de données (61) pour obtenir le matériau de l'objet construit (65), la condition de soudage et le tracé de soudage (A, B, C) correspondant à une valeur de propriété cible de l'objet construit (65) ; et
une unité de sortie (49) configurée pour présenter le matériau obtenu de l'objet construit (65), la condition de soudage et le tracé de soudage (A, B, C) correspondant à la valeur de propriété cible.
